# EUROPEAN PATENT APPLICATION

(11) **EP 3 225 328 A1**
(43) Date of publication of application: **04.10.2017**
(21) Application number: 15862702.6
(22) Date of filing: 06.11.2015
(51) Int. Cl.: B22C 9/04, A61C 13/20, B28B 1/14, B28B 1/54

(54) **WAX PATTERN SURFACE TREATMENT AGENT, AND METHOD FOR MANUFACTURING DENTAL PROSTHESIS**

(30) Priority: 27.11.2014 JP 2014240466
(71) Applicant: GC Corporation, Bunkyo-ku Tokyo 113-0033 (JP)
(72) Inventor: MORI, Daizaburo, Tokyo 174-8585 (JP); FUKUSHIMA, Emiko, Tokyo 174-8585 (JP); FUJIMOTO, Tatsuya, Tokyo 174-8585 (JP)
(74) Representative: Müller-Boré & Partner Patentanwälte PartG mbB
(86) International application number: PCT/JP2015/081330
(87) International publication number: WO 2016/084585

(57) **Abstract**

Providing a surface treatment agent for a wax pattern containing solvent; boron nitride; and a surface-active agent.

## Description

### BACKGROUND OF THE INVENTION

### 1. Field of the Invention

The present invention relates to a surface treatment agent for a wax pattern and a method of manufacturing a dental prosthesis.

### 2. Description of the Related Art

When a part of a tooth is removed or lost by a dental treatment or the like, as it is impossible for the tooth to naturally regrow the removed portion or the lost portion, a dental prosthesis is provided at the removed portion or the lost portion. As a material of the dental prosthesis, conventionally, metal is used. However, from an esthetic viewpoint, recently, a dental prosthesis made of ceramics is increasingly used.

For the dental prosthesis made of ceramics, for example, first, a wax pattern formed into a shape corresponding to a shape of the dental prosthesis to be formed is invested in an investment, and the wax pattern is burned after the investment is set to form a mold. Next, by heating a ceramics block to be pressed into the formed mold, and performing press molding, the dental prosthesis made of ceramics with a desired shape can be manufactured.

For example, Patent Document 1 discloses a structure that includes a press conduit and at least one mold cavity portion connected to the press conduit via at least one connection conduit, and a method in which, while heating a raw material for pressing inserted in the press conduit and applying a pressing pressure, a material of the raw material for pressing is filled in the mold cavity portion, and as a result, a sintered ceramic dental prosthesis is manufactured.

### [Patent Document]

[Patent Document 1] Japanese Laid-open Patent Publication No. 2009-112818

However, conventionally, when press molding a ceramics block, roughness may be generated at a surface of a ceramic formed by the mold, and depending on a degree of the roughness, it is necessary to remove the roughness by grinding or the like after ejecting it from the mold.

### SUMMARY OF THE INVENTION

The present invention is made in light of the above problems, and according to an aspect of the present invention, a surface treatment agent for a wax pattern is provided capable of suppressing generation of roughness at a surface of a ceramic when shaping a ceramics block by a mold.

According to an embodiment, there is provided a surface treatment agent for a wax pattern containing solvent, boron nitride and a surface-active agent.

According to the embodiment, a surface treatment agent for a wax pattern can be provided capable of suppressing generation of roughness at a surface of a ceramic when shaping a ceramics block by a mold.

### BRIEF DESCRIPTION OF THE DRAWINGS

Fig. 1A is a view for describing a step of manufacturing a mold from a wax pattern in an embodiment;
Fig. 1B is a view for describing a step of manufacturing the mold from the wax pattern in the embodiment;
Fig. 1C is a view for describing a step of manufacturing the mold from the wax pattern in the embodiment;
Fig. 1D is a view for describing a step of manufacturing the mold from the wax pattern in the embodiment;
Fig. 2A is a view for describing a step of manufacturing a dental prosthesis using the mold in the embodiment; and
Fig. 2B is a view for describing a step of manufacturing the dental prosthesis using the mold in the embodiment.

### DETAILED DESCRIPTION OF THE PREFERRED EMBODIMENTS

Although the invention will be described herein with reference to illustrative embodiments, the present invention is not limited to the following embodiments and minor modifications may be made therein without departing from the spirit and scope of the invention.

### (Surface treatment agent for wax pattern)

An example of a structure of a surface treatment agent for a wax pattern is described in this embodiment.

The surface treatment agent for a wax pattern of the embodiment may contain solvent, boron nitride and a surface-active agent.

It is estimated and confirmed by the present inventors, by studying a reason why roughness is generated at a surface of a ceramic when a ceramics block is press molded by a mold, that the reason is partial seizure between the mold and the ceramic filled in the mold. It is considered that such seizure occurs because a surface of a baked body of an investment that constitutes the mold is melted when the ceramics block is press molded and reacted with the ceramic.

Then, it can be considered to lower temperature when performing press molding in order to prevent generation of the seizure. However, in such a case, the ceramic is not easily filled in the mold, and there is a problem that a dental prosthesis of a desired shape cannot be obtained.

Thus, the present inventors studied a method for suppressing generation of roughness at a surface of a ceramic without lowing the temperature when performing press molding. Then, the present invention is completed by finding that roughness at a surface of an obtained dental prosthesis can be suppressed by processing a surface of a wax pattern having a shape corresponding to a shape of the dental prosthesis to be formed by a surface treatment agent, and manufacturing a mold by using the wax pattern to prevent seizure.

Each component contained in a surface treatment agent for a wax pattern of the embodiment is described.

First, the solvent is described.

The solvent is not specifically limited, and liquid capable of dispersing the boron nitride and the surface-active agent, which are other components, may be used. As the solvent, for example, it is preferable to contain one or more kinds selected from water, ethanol, methanol, propanol, butanol, pentanol, acetone, tetrahydrofuran and methyl ethyl ketone.

Here, as the solvent is a component added so that the boron nitride and the surface-active agent contained in the surface treatment agent for a wax pattern are more uniformly coated on a surface of the wax pattern, it is preferable that the solvent is a component that is easily evaporated after being coated on the surface of the wax pattern. Further, it is preferable that a reactivity with the wax pattern is low.

Thus, as the solvent, it is more preferable to contain one or more kinds selected from ethanol, methanol, propanol, butanol, pentanol, tetrahydrofuran and methyl ethyl ketone.

Next, the boron nitride is described.

As described above, the mold that is used when manufacturing the dental prosthesis is formed by investing the wax pattern having a shape corresponding to the dental prosthesis to be formed in an investment, and, after the investment is set, burning the wax pattern. Here, as described above, as the wax pattern is burned when forming the mold, a cavity corresponding to the wax pattern is formed in the mold.

When the surface treatment agent for a wax pattern of the embodiment is used, the surface treatment agent for a wax pattern may be previously coated on the surface of the wax pattern, the wax pattern may be invested in the investment, and the mold may be formed similarly as described above. Then, as a boiling point of the boron nitride, among the components contained in the surface treatment agent for a wax pattern of the embodiment, is high, the boron nitride is not vaporized even when the wax pattern is burned.

Thus, the boron nitride contained in the surface treatment agent for a wax pattern remains at a surface of the cavity corresponding to the wax pattern formed in the mold in a substantially uniformly dispersed manner. Then, the boron nitride substantially uniformly dispersed at the surface of the cavity can suppress the seizure between the ceramic introduced into the mold and the mold, when the ceramics block is press molded in the mold.

The boron nitride in a powder form may be used, and its grain size or the like is not specifically limited. However, it is preferable that the boron nitride powder has a grain size that can be dispersed into the surface treatment agent for a wax pattern and that can be easily uniformly coated on the surface of the wax pattern. Thus, it is preferable that the mean diameter of the boron nitride is less than or equal to 20 µm, and more preferably, less than or equal to 10 µm. Although the lower limit value of the mean diameter is not specifically limited, from a viewpoint of handling or the like at preparation of the surface treatment agent for a wax pattern, it is preferable that the mean diameter is greater than or equal to 0.01 µm.

The mean diameter described here means a grain size at an integrated value 50% in a grain size distribution obtained by a laser diffraction/scattering method.

The content of the boron nitride in the surface treatment agent for a wax pattern is not limited, and may be selected such that the roughness at the surface of the ceramic can be suppressed when the ceramics block is press molded after forming the mold, in accordance with the coating period, the coating amount or the like of the surface treatment agent for a wax pattern. From a view point of surely suppressing the roughness of the surface of the ceramic, it is preferable that the surface treatment agent for a wax pattern of the embodiment contains the boron nitride greater than or equal to 0.1 wt.%, and more preferably, greater than or equal to 1 wt.%, for example.

Although the upper limit value of the content of the boron nitride is not specifically limited as well, it is preferable that the content may be selected by considering handling or the like at coating the surface treatment agent for a wax pattern on the surface of the wax pattern. For example, it is preferable that the content of the boron nitride in the surface treatment agent for a wax pattern is less than or equal to 20 wt.%, and more preferably, less than or equal to 10 wt.%.

Next, the surface-active agent is described.

By adding the surface-active agent, the boron nitride can be furthermore uniformly dispersed in the surface treatment agent for a wax pattern of the embodiment, and when coating the surface treatment agent for a wax pattern on the surface of the wax pattern, the boron nitride can be furthermore uniformly coated on the surface of the wax pattern. Then, by manufacturing the dental prosthesis using the mold formed by the wax pattern on which the boron nitride is furthermore uniformly coated, the seizure between the ceramic and the mold can be particularly suppressed.

Further, by coating the surface-active agent on the surface of the wax pattern, affinity of the wax pattern and the investment can be increased. Thus, when investing the wax pattern in the investment, parts other than the wax pattern can be surely filled by the investment, and formation of an undesired void in the mold can be prevented.

Although the type of the surface-active agent is not specifically limited, an ether-based surface-active agent or the like may be used, for example.

The content of the surface-active agent is not specifically limited and may be arbitrarily selected. However, in order to sufficiently increase the above described dispersibility of the boron nitride in the surface treatment agent for a wax pattern and the affinity between the wax pattern and the investment, it is preferable that the surface treatment agent for a wax pattern contains the surface-active agent greater than or equal to 0.01 wt.%, and more preferably, greater than or equal to 0.1 wt.%.

Although the upper limit value of the content of the surface-active agent is not specifically limited, for example, it is preferable that the content is less than or equal to 5 wt.%, and more preferably, less than or equal to 2.5 wt.%. This is because, there is no large effect even when adding the surface-active agent greater than 5 wt.%.

Here, components contained in the surface treatment agent for a wax pattern of the embodiment are not limited to the above described components, and optional components may be added in accordance with necessity. Specifically, for example, as a film forming material, silica or zirconia particles which do not react by heat in forming may be blended, as a wetting agent for the wax pattern, ethylene glycol, diethylene glycol, butanediol, glycerol or the like may be added, and for adjusting viscosity, a water-soluble polymer or the like may be added or contained.

The method of preparing the surface treatment agent for a wax pattern of the embodiment is not specifically limited, and may be prepared by mixing the above described components and optional components, if desired, for example.

By manufacturing a dental prosthesis made of ceramics using a mold manufactured using a wax pattern after coating the above described surface treatment agent for a wax pattern of the embodiment on a surface of the wax pattern, generation of roughness at a surface of the dental prosthesis can be suppressed.

Here, although the surface treatment agent for a wax pattern of the embodiment is particularly preferably used for manufacturing a dental prosthesis made of ceramics, it is also preferably used for manufacturing a ceramics member other than the dental prosthesis using a wax pattern.

### (Method of manufacturing dental prosthesis)

Next, an example of a method of manufacturing a dental prosthesis is described.

The method of manufacturing the dental prosthesis of the embodiment may include following steps in order, for example.

A wax pattern surface treatment agent coating step in which the surface treatment agent for a wax pattern of the embodiment is coated on a surface of a wax pattern.

An investing step in which the wax pattern is invested in an investment.

A burning step in which, after the investment is set, the investment including the wax pattern is heated to burn up the wax pattern to form a mold.

A molding step in which a ceramics block is casted in the mold.

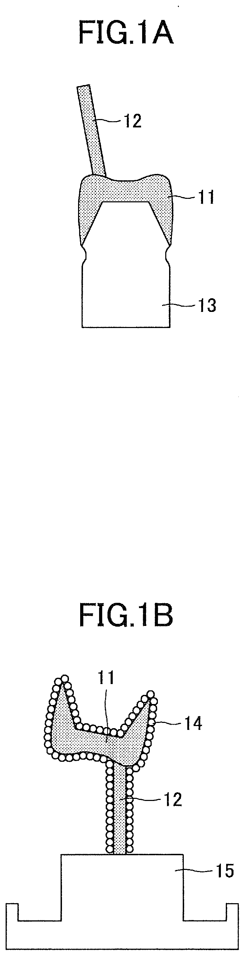

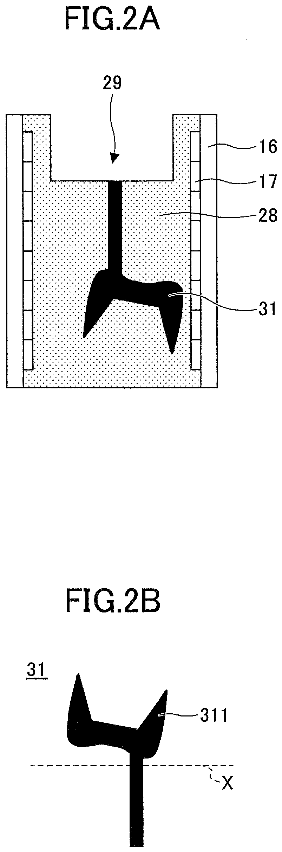

Here, each step of the method of manufacturing the dental prosthesis of the embodiment is described below with reference to Fig. 1A to Fig. 1D, Fig. 2A and Fig. 2B.

Fig. 1A to Fig. 1D, Fig. 2A and Fig. 2B schematically illustrate each step of the method of manufacturing the dental prosthesis of the embodiment.

First, before starting the method of manufacturing the dental prosthesis of the embodiment, as illustrated in Fig. 1A, a wax pattern 11 having a shape corresponding to a dental prosthesis to be formed may be prepared.

The wax pattern 11 is invested in an investment, and burned after the invest is set to form a mold having a void with a shape corresponding to the dental prosthesis in the investment. Then, by supplying a ceramic in the void of the mold, a dental prosthesis with a desired shape can be formed. Then, when forming the void with the shape corresponding to the dental prosthesis in the investment, in order to form a supplying path for supplying the ceramic to the void, it is preferable that a sprue pin 12 is also formed to the wax pattern 11.

In order to make the wax pattern 11 into the shape corresponding to the dental prosthesis to be formed, the wax pattern 11 may be formed on a gypsum model 13 manufactured by flowing gypsum into a dental mold obtained by an impression material or the like, for example.

It is preferable that both of the wax pattern 11 and the sprue pin 12 are formed by a dental wax.

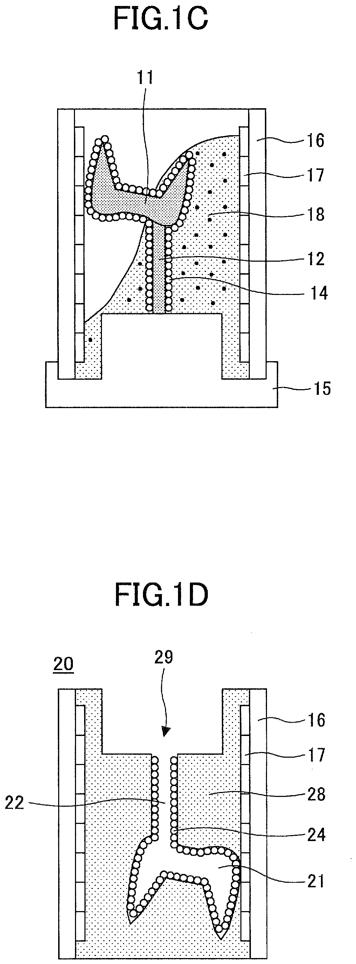

Next, as illustrated in Fig. 1B, the wax pattern surface treatment agent coating step of coating the surface treatment agent for a wax pattern 14 of the embodiment on surfaces of the wax pattern 11 and the sprue pin 12 may be performed. The method of coating is not specifically limited, and coating may be performed by using a spray for uniformly coating on the wax pattern 11 and the sprue pin 12, for example. Here, in Fig. 1B and Fig. 1C, the surface treatment agent for a wax pattern 14 is illustrated by large white circles so that the existence of the surface treatment agent for a wax pattern 14 can be easily recognized, for an explanation purpose.

It is preferable that the wax pattern surface treatment agent coating step is performed under a condition that the wax pattern 11 and the sprue pin 12 are fixed on a base. For example, as the wax pattern 11 and the sprue pin 12 are fixed to a crucible former 15 in the investing step, which will be described later, this step may be performed under being fixed to the crucible former 15 as well.

It is preferable that the solvent contained in the surface treatment agent for a wax pattern is removed by drying, after coating the surface treatment agent for a wax pattern in the wax pattern surface treatment step.

When a material such as an alcohol group whose boiling point is low is used as the solvent, it is possible to dry by being left for about a few minutes at room temperature. When a material such water that is not easily dried at room temperature is used as the solvent, a drying machine or the like may be used to dry. However, as the surface-active agent added in the surface treatment agent for a wax pattern of the embodiment functions to increase the affinity between the wax pattern 11 and the investment, which will be described later, it is preferable that at least a part is left at the surface of the wax pattern 11 in this step.

Next, as illustrated in Fig. 1C, the investing step of investing the wax pattern in the investment may be performed.

Here, before performing the investing step, a ring 16 may be placed at a peripheral portion of a base portion of the crucible former 15 to which the wax pattern 11 and the sprue pin 12 are fixed such that to surround the wax pattern 11 and the sprue pin 12. A liner 17 may be formed inside the ring 16.

Then, the investment 18 (referred to as a "mold material" as well) in a slurry form may be flowed into the ring 16 to invest the wax pattern 11 and the sprue pin 12.

The type of the investment used in the investing step is not specifically limited, and a material capable of enduring the temperature and the pressure at which the ceramics block is press molded may be used. For example, a phosphate-based investment is preferably used.

Then, after the investment is set, the burning step of heating the investment including the wax pattern to burn the wax pattern and form a mold may be performed.

After performing the investing step and the investment is set, the crucible former 15 may be removed, and baking may be performed. The baking temperature at this time is not specifically limited, and the temperature may be selected in accordance with a material of the wax used for forming the wax pattern 11 and the sprue pin 12 or a material of the investment 18.

By performing the burning step, as illustrated in Fig. 1D, the wax pattern 11 is removed, and a void 21 corresponding to the dental prosthesis to be formed is formed, and as the sprue pin 12 is also burned, a sprue pin portion 22 communicating with the void 21 is formed. A sprue gate portion 29 (referred to as a "crucible portion" as well) is formed at one end portion of the sprue pin portion 22 for placing the ceramics block in the molding step, which will be described later. The sprue gate portion 29 has a shape corresponding to the crucible former 15 that fixes the sprue pin portion 22.

Then, a status can be made in which the boron nitride 24 contained in the surface treatment agent for a wax pattern of the embodiment that is coated on the surface of the wax pattern 11 is dispersed at surfaces of the void 21 and the sprue pin portion 22. Here, in the drawings, the surface treatment agent for a wax pattern 14 is illustrated by large white circles so that the existence of the surface treatment agent for a wax pattern 14 can be easily recognized, for an explanation purpose.

Further, by performing the burning step, the investment is also baked to become a baked body 28 of the investment, and a mold 20 having the void 21 with a shape corresponding to the dental prosthesis to be formed in the baked body 28 of the investment can be formed.

Next, the molding step of casting a ceramics block into the mold formed in the burning step may be performed. This means that, in the molding step, the ceramics block can be filled in the void in the mold formed by burning the wax pattern in the investment by heating and pressing.

Specifically, the ceramics block is placed at the sprue gate portion 29 of the mold 20 described with reference to Fig. 1D, and press molded so that a ceramic can be filled in the void 21 and the sprue pin portion 22.

By performing the molding step, as illustrated in Fig. 2A, a ceramics molded body 31 can be manufactured.

After the molding step is finished, the ceramics molded body 31 is taken out from the mold. Then, by cutting along a dotted line X as illustrated in Fig. 2B, for example, a dental prosthesis 311 can be obtained.

According to the above described method of manufacturing the dental prosthesis of the embodiment, generation of roughness at the surface of the dental prosthesis made of ceramics can be suppressed when manufacturing the dental prosthesis by press molding the ceramics block. Thus, the dental prosthesis can be manufactured with better yield compared with a conventional method.

### (Examples)

Although specific examples and comparative examples are described hereinafter, the present invention is not limited to those examples.

### (Example 1)

### (Preparation of surface treatment agent for wax pattern)

98 parts by weight of methyl ethyl ketone (simply referred to as "MEK" as well) as the solvent, 2 parts by weight of boron nitride powders (mean diameter 4 µm) and 0.2 parts by weight of a polyether-based surface-active agent as the surface-active agent were mixed by a mixer to prepare a surface treatment agent for a wax pattern.

### (Manufacturing of dental prosthesis)

A dental mold was obtained from a tooth of a patient using a silicone rubber impression material. Then, gypsum was flowed into the dental mold to form a gypsum model.

Next, as illustrated in Fig. 1A, the wax pattern 11 was formed on the gypsum model 13 using a dental wax (manufactured by GC corporation, product name: INLAY WAX). Next, the sprue pin 12 with a diameter of 2.5 mm was set.

Then, as illustrated in Fig. 1B, the wax pattern 11 and the sprue pin 12 were bonded on the crucible former 15. Then, the above described surface treatment agent for a wax pattern 14 was coated on a surface of the wax pattern 11 and a surface of the sprue pin 12 using a spray (wax pattern surface treatment agent coating step).

Next, the ring 16 inside of which the liner 17 was formed was placed at a peripheral portion of a base portion of the crucible former 15 to which the wax pattern 11 and the sprue pin 12 were fixed such that to surround the wax pattern 11 and the sprue pin 12.

Then, as illustrated in Fig. 1C, the wax pattern 11 and the sprue pin 12 were invested by flowing the investment 18 (referred to as a "molding material" as well) in a slurry form into the ring 16 (investing step).

At this time, as the investment, a phosphate-based investment (manufactured by GC EUROPE, product name: Multi press vest) was used.

After being left until the investment was set, the crucible former 15 was removed, and the investment including the wax pattern 11 was heated at 850 °C for 30 minutes under air atmosphere to burn the wax pattern and form the mold (burning step).

After the burning step, as illustrated in Fig. 1D, it was confirmed that the wax pattern 11 and the sprue pin 12 were removed.

Then, a lithium disilicate ceramics block was placed at the sprue gate portion 29 of the mold 20 illustrated in Fig. 1D, and press molding was performed by heating the mold 20 and the ceramics block at 930 °C under air atmosphere and pressing the ceramics block by a piston. By performing the press molding, the ceramic was filled in the sprue pin portion 22 and the void 21 in the mold 20 as illustrated in Fig. 2A (molding step).

After being cooled, the ceramics molded body 31 was taken out from the mold 20, and by cutting the sprue pin portion as illustrated in Fig. 2B, the dental prosthesis 311 was obtained.

By similarly performing, ten dental prostheses in total, including the above described one were manufactured, and deposited materials at the surfaces were removed by performing sand-blast by glass beads at pressure of 0.4 MPa. Thereafter, whether a reaction layer is included was confirmed by viewing. Here, such a reaction layer is an intermediate layer of the investment and the ceramic, and is the roughness described in the embodiment. When a reaction layer with a diameter of greater than or equal to 1 mm was included, it was evaluated as a rejected product, and when the diameter of the reaction layer is less than 1 mm, it can be said that the generation of the roughness was suppressed, and it was evaluated as an acceptable product.

In this example, it was confirmed that the manufactured ten dental prostheses were acceptable products.

### (Example 2)

Ten dental prostheses in total were manufactured similarly as example 1 except that ethanol was used as the solvent when preparing the surface treatment agent for a wax pattern.

After evaluating similarly as example 1, it was confirmed that ten among ten products were confirmed to be acceptable products.

### (Example 3)

Dental prostheses were manufactured similarly as example 1 except that water was used as the solvent when preparing the surface treatment agent for a wax pattern, and after the wax pattern surface treatment agent coating step, the investing step was performed after the wax pattern was dried by a drying machine set at 45 °C. In this example as well, ten dental prostheses in total were manufactured and evaluated.

After evaluating similarly as example 1, it was confirmed that ten among ten products were confirmed to be acceptable products.

In this example, as water was used as the solvent of the surface treatment agent for a wax pattern, and time for drying the solvent was necessary after the wax pattern surface treatment agent coating step. Thus, as described above, drying by the drying machine was performed.

### (Example 4)

Ten dental prostheses in total were manufactured similarly as example 1 except that the content of the boron nitride powders was 15 parts by weight when preparing the surface treatment agent for a wax pattern.

When coating the surface treatment agent for a wax pattern on the surface of the wax pattern in the wax pattern surface treatment agent coating step, a nozzle for the surface treatment agent for a wax pattern was blocked, and it was impossible to coat by a spray. Thus, coating was performed using a brush. Thus, compared with example 1, time necessary for the wax pattern surface treatment agent coating step became long.

After evaluating similarly as example 1, it was confirmed that eight among ten products were acceptable products.

### (Example 5)

Ten dental prostheses in total were manufactured similarly as example 1 except that the content of the boron nitride powders was 0.07 parts by weight when preparing the surface treatment agent for a wax pattern.

After evaluating similarly as example 1, it was confirmed that eight among ten products were acceptable products, but two rejected products were included.

In this example as well, as described above, eight among ten products were acceptable products, and it was confirmed that the generation of the roughness was sufficiently suppressed. Here, it is considered that the reason why two among ten products were rejected products was that the concentration of the boron nitride in the used surface treatment agent for a wax pattern was lower than that of example 1, and a sufficient amount of the boron nitride might not be coated on a surface of the wax pattern.

### (Example 6)

Ten dental prostheses in total were manufactured similarly as example 1 except that the boron nitride whose mean diameter was 6 µm was used when preparing the surface treatment agent for a wax pattern.

After evaluating similarly as example 1, it was confirmed that ten among ten products were confirmed to be acceptable products.

In this example as well, as described above, ten among ten products were acceptable products, and it was confirmed that the generation of the roughness was sufficiently suppressed.

### (Example 7)

Ten dental prostheses in total were manufactured similarly as example 1 except that the content of the surface-active agent was 10 parts by weight when preparing the surface treatment agent for a wax pattern. Here, an ether-based surface-active agent was used as the surface-active agent.

After evaluating similarly as example 1, ten among ten products were acceptable products.

### (Example 9)

Ten dental prostheses in total were manufactured similarly as example 1 except that the content of the surface-active agent was 0.05 parts by weight when preparing the surface treatment agent for a wax pattern. Here, an ether-based surface-active agent was used as the surface-active agent.

After evaluating similarly as example 1, it was confirmed that eight among ten products were acceptable products, but two rejected products were included.

In this example as well, as described above, eight among ten products were acceptable products, and it was confirmed that the generation of the roughness was sufficiently suppressed. Here, it can be considered that the reason why two among ten products were rejected products was that the added content of the surface-active agent was small as 0.05 parts by weight, and the boron nitride was partially aggregated in the surface treatment agent for a wax pattern.

### (Comparative example 1)

Ten dental prostheses in total were manufactured similarly as example 1 except that the surface treatment agent for a wax pattern was not prepared and the wax pattern surface treatment agent coating step was not performed.

After evaluating similarly as example 1, it was confirmed that ten among ten products were rejected products.

### (Comparative example 2)

Ten dental prostheses in total were manufactured similarly as example 1 except that boron nitride was not added when preparing the surface treatment agent for a wax pattern.

After evaluating similarly as example 1, it was confirmed that ten among ten products were rejected products.

### (Comparative example 3)

Ten dental prostheses in total were manufactured similarly as example 1 except that the surface-active agent was not added when preparing the surface treatment agent for a wax pattern.

After evaluating similarly as example 1, it was confirmed that four among ten products were acceptable products, but six rejected products were included.

It can be considered that the reason why four among ten products were acceptable products was, as the surface-active agent was not added in the surface treatment agent for a wax pattern, and the boron nitride was not sufficiently dispersed in the surface treatment agent for a wax pattern and the boron nitride may be non-uniformly coated when coating the wax pattern.

Although a preferred embodiment of the surface treatment agent for a wax pattern and the method of manufacturing the dental prosthesis has been specifically illustrated and described, it is to be understood that minor modifications may be made therein without departing from the spirit and scope of the invention as defined by the claims.

The present application is based on and claims the benefit of priority of Japanese Priority Application No. 2014-240466 filed on November 27, 2014, the entire contents of which are hereby incorporated by reference.

### [Numerals]

- 11: wax pattern
- 14: surface treatment agent for wax pattern
- 18: investment
- 21: void

## Claims

1. A surface treatment agent for a wax pattern comprising:
solvent;
boron nitride; and
a surface-active agent.

2. The surface treatment agent for a wax pattern according to claim 1,
wherein the content of the boron nitride is greater than or equal to 0.1 wt.% and less than or equal to 10 wit.%, and
wherein the content of the surface-active agent is greater than or equal to 0.1 wt.% and less than or equal to 5 wt.%.

3. The surface treatment agent for a wax pattern according to claim 1 or 2, wherein the solvent contains one or more kinds selected from water, ethanol, methanol, propanol, butanol, pentanol, acetone, tetrahydrofuran and methyl ethyl ketone.

4. A method of manufacturing a dental prosthesis comprising, in this order:
a wax pattern surface treatment agent coating step of coating the surface treatment agent for a wax pattern according to any one of claims 1 to 3 on a surface of a wax pattern;
an investing step of investing the wax pattern in an investment;
a burning step of heating, after the investment is set, the investment including the wax pattern and burning the wax pattern to form a mold; and
a molding step of casting a ceramics block in the mold.
